# EUROPEAN PATENT APPLICATION

(11) **EP 4 679 200 A1**
(43) Date of publication of application: **14.01.2026**
(21) Application number: 25188266.8
(22) Date of filing: 08.07.2025
(51) Int. Cl.: G05B 13/02, G05B 17/02, G05B 19/418

(54) **DIGITAL TWIN FOR MANUFACTURING**

(30) Priority: 08.07.2024 US 202463668695 P
(71) Applicant: Magna International Inc., Aurora, ON L4G 7K1 (CA)
(72) Inventor: Verma, Rajeev, Troy, 48084 (US); Anik, Animesh Kundu, Windsor, N9B 1K3 (CA); Afzal, Shehzad, 8020 Graz (AT); Iyer, Lakshmi Varaha, Windsor, N8P 0B4 (CA)
(74) Representative: Witte, Weller & Partner Patentanwälte mbB

(57) **Abstract**

A method of controlling a manufacturing process includes: creating a digital twin model representing one of the manufacturing process or a manufactured article that is formed or modified by the manufacturing process; revising the digital twin model with real-time data regarding a physical instance of the one of the manufacturing process or the manufactured article; making a decision, based on the digital twin model, regarding the physical instance of the one of the manufacturing process or the manufactured article; and causing or modifying an action, based on the decision regarding the physical instance of the one of the manufacturing process or the manufactured article.

## Description

### CROSS REFERENCE TO RELATED APPLICATIONS

This U.S. utility patent application claims the benefit of U.S. Provisional Patent Application No. 63/668,695, filed July 8, 2024 the contents of which is incorporated herein by reference in its entirety.

### FIELD

The present disclosure relates generally to implementation and use of a digital twin for manufacturing applications.

### BACKGROUND

Manufacturing is centered around a few main themes. It starts with a customer publishing product requirements. Design engineers may then design a product based on these requirements. Once the design is approved by the customer, the process engineers design the process. In both of these design exercises (product and process), Computer Aided Design (CAD), Computer Aided Engineering (CAE) and Finite Element Analysis (FEA) tools may be utilized. Once the process is approved by the customer, this process simulation is customized to specific manufacturing machines/processes. Once machine/process parameters are finalized, trials are carried out and finally serial production can begin.

### SUMMARY

The present disclosure provides a method of controlling a manufacturing process. The method includes: creating a digital twin model representing one of the manufacturing process or a manufactured article that is formed or modified by the manufacturing process; revising the digital twin model with real-time data regarding a physical instance of the one of the manufacturing process or the manufactured article; making a decision, based on the digital twin model, regarding the physical instance of the one of the manufacturing process or the manufactured article; and causing or modifying an action, based on the decision regarding the physical instance of the one of the manufacturing process or the manufactured article.

These and other aspects of the present disclosure are disclosed in the following detailed description of the embodiments, the appended claims, and the accompanying figures

### BRIEF DESCRIPTION OF THE DRAWINGS

Further details, features and advantages of designs of the invention result from the following description of embodiment examples in reference to the associated drawings.
FIGS. 1A - 1B each show a schematic block diagram of a digital twin.
FIGS. 2A - 2C each show a schematic block diagram of a digital twin in a particular manufacturing application, in accordance with the present disclosure.
FIG. 3 shows an overview system model of an electric drive unit (EDU), in accordance with the present disclosure.
FIG. 4 shows a block diagram of a digital twin for an EDU, in accordance with the present disclosure.
FIG. 5 shows a block diagram combining two different digital twin models for the EDU, in accordance with the present disclosure.
FIG. 6 shows a schematic diagram illustrating Input & Output Parameters for the digital twin models of the EDU.
FIG. 7 shows a graph of torque vs. speed for the EDU.
FIG. 8 shows a graph illustrating torque oscillation amplitude as a function of phase current offset for the EDU.
FIG. 9 shows a schematic diagram for a validation strategy comparing a digital twin with a conventional end-of-line (EoL) hardware testing approach, in accordance with the present disclosure.
FIG. 10 shows a schematic diagram of a manufacturing line using a conventional full EoL test for all assemblies.
FIG. 11 shows a schematic diagram of a manufacturing line using a digital twin for reducing EoL testing for some assemblies.
FIG. 12 shows a schematic block diagram of an EDU specific EoL test result prediction using a digital twin.
FIG. 13 shows a block diagram of a system for a process digital twin operating in real-time.
FIG. 14 shows a schematic flow diagram illustrating real-time deployment of a digital twin for operating a machine.
FIG. 15 shows a listing of steps in a method for implementing a digital twin for operating an injection molding machine.
FIG. 16 shows a workflow diagram illustrating an EoL test for an EDU using a digital twin.
Fig. 17 shows a flow chart listing steps in a method of controlling a manufacturing process.

### DETAILED DESCRIPTION

Referring to the drawings, the present invention will be described in detail in view of following embodiments. The present disclosure focuses on two main aspects of the manufacturing process: Product Design, and Design of the manufacturing process.

Product design: during product design, high fidelity simulation tools (CAD/CAE/FEA) are utilized for designing the product as per customer requirements. Many iterations of the design may need to be carried out to find the optimal dimensions. The optimal design will meet or exceed customer requirements while minimizing the cost to produce the product. This, in turn, will require careful material selection, manufacturing process selection, minimizing the amount of material to be consumed to produce the part, optimizing the amount of energy to be consumed to produce the part, and many other considerations. In order to determine the optimal product, many design of experiments (DoE) will need to be carried out. This entails: identifying performance critical design parameters for the product that comprise the design space, vary these parameters and run simulations to explore the design space, and finally to pick the best design alternative based on the results achieved.

Design of manufacturing process: design on manufacturing process is similar to the design of product. This process designs the production process, instead of the product. This involves developing a high fidelity (CAD/CAE/FEA) simulation model of the manufacturing process, and optimizing this process based on criterion such as cycle time, energy cost, quality of parts produced, and so on. The two steps above result in high fidelity models of product and process that can predict the performance of the product as well as the manufacturing process. These models can be utilized in real world as digital twins of the product or the digital twin of the manufacturing process. The limitation in using these models as digital twins is the computational complexity of these models as well as the complexity of data entry to reconfigure these models for variations of the same product/process. In order to alleviate these shortcomings, we propose using a) reduced order models and b) neural network based deep learning models. These models can be trained on the DoE data produced during the product/process design. Once trained, these models can be deployed on edge computers that accept data on the current status of process or the current product being manufactured through Unified Name Space (UNS) and MQTT protocol. MQTT is a lightweight, publish-subscribe, machine to machine network protocol for message queue/message queuing service.

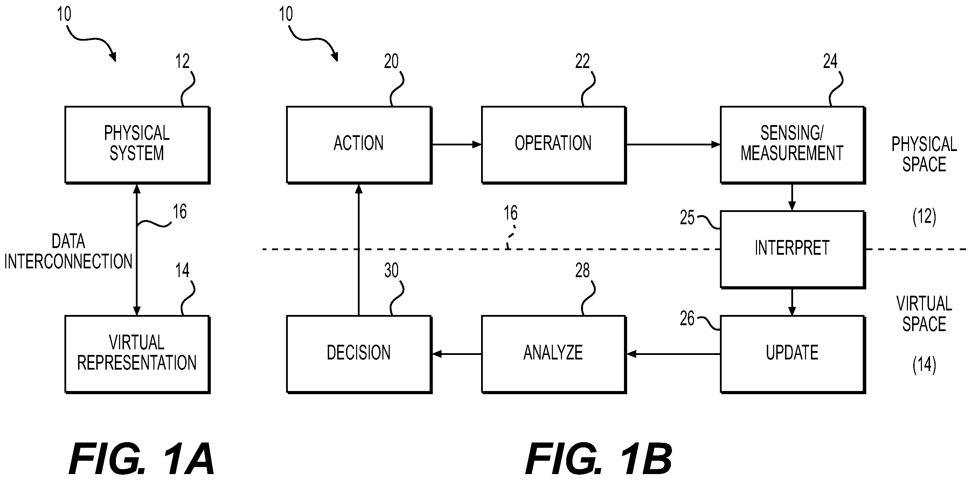

FIGs. 1A and 1B each show a schematic block diagram of a digital twin 10. As shown, the digital twin 10 bridges a physical space 12, which may also be called a physical reality, with a virtual space 14, which may also be called a virtual representation or a simulated reality. A data interconnection 16 provides bi-directional transfer of data between the physical space 12 and the virtual space 14. FIG. 1B includes some additional detail, with the physical space 12 including an action 20 that impacts an operation 22 and which leads to a measurement 24. For example, the action 20 may include a setting for a machine that impacts a machining operation 22 and which is measured at 24. The measurement 24 regarding the physical space is interpreted at 25 to describe one or more features of a model in the virtual space 14. The virtual space 14 includes updating, at 26, the model based on interpreted data from the interpretation 25. The virtual space 14 includes analyzing the updated model at 28 and making a decision at 30. The decision 30 is communicated back to the physical space 12 to cause or modify the action 20, thereby completing a feedback control loop.

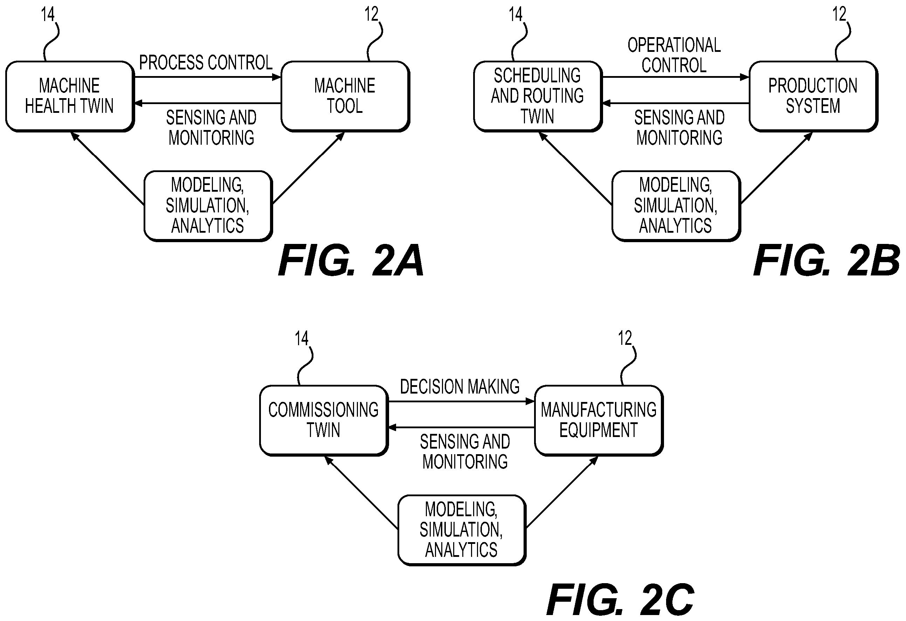

FIGS. 2A - 2C each show a schematic block diagram of a digital twin in a particular manufacturing application, in accordance with the present disclosure. FIG. 2A shows use of a machine health twin in the virtual space 14 to affect operation of a machine tool in the physical space 12 in order to minimize impacts of machine downtime. FIG. 2B shows use of a scheduling and routing twin in the virtual space 14 to affect operation of a production system in the physical space 12 in order to optimize a production schedule. FIG. 2C shows use of a commissioning twin in the virtual space 14 to affect operation of a manufacturing equipment in the physical space 12 for commissioning manufacturing equipment.

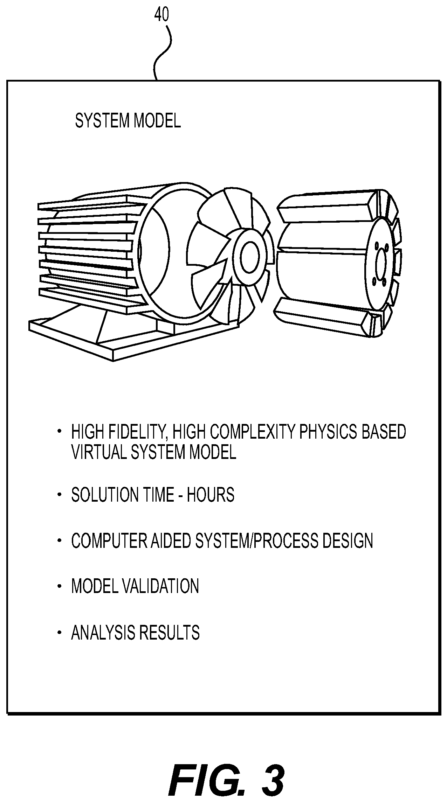

FIG. 3 shows an overview of a system model 40 of an electric drive unit (EDU), in accordance with the present disclosure. The EDU may include an electric machine (also called electric motor), such as a motor or a motor/generator, together with an inverter, which may also be called an electric motor drive unit, for supplying power to the electric machine, a motor housing, and a gearbox. The EDU may include other hardware and/or software, such as control electronics for operating the inverter. The system model 40 may provide an analytical model to guide product design. The system model 40 may include a high-fidelity, high-complexity, physics-based virtual system model. The system model 40 may provide a solution for given parameters in a matter of hours. The system model 40 may include a computer-aided system/ process design, which may also include model validation and analysis results.

The system model 40 may include a model-based systems engineering (MBSE)/ Computer aided engineering (CAE)/ Finite Element Analysis (FEA) tools. The inverter may be simulated using simulink, the simulation of the electric motor may include a CAE/FEA simulation performed using Ansys MotorCAD, the simulation of gearbox may be performed in Abacus and housing CAD design is available and utilized for Noise, Vibration, and Harshness (NVH) simulation of the integrated EDU assembly (motor+housing+gearbox). However, other simulation software tools and CAD design tools may be used. The system model 40 may enable model validation performed on a limited number of pre-production samples. Conventional uses of the system model 40 may include no uses of the system model 40 after a design of the EDU is finalized.

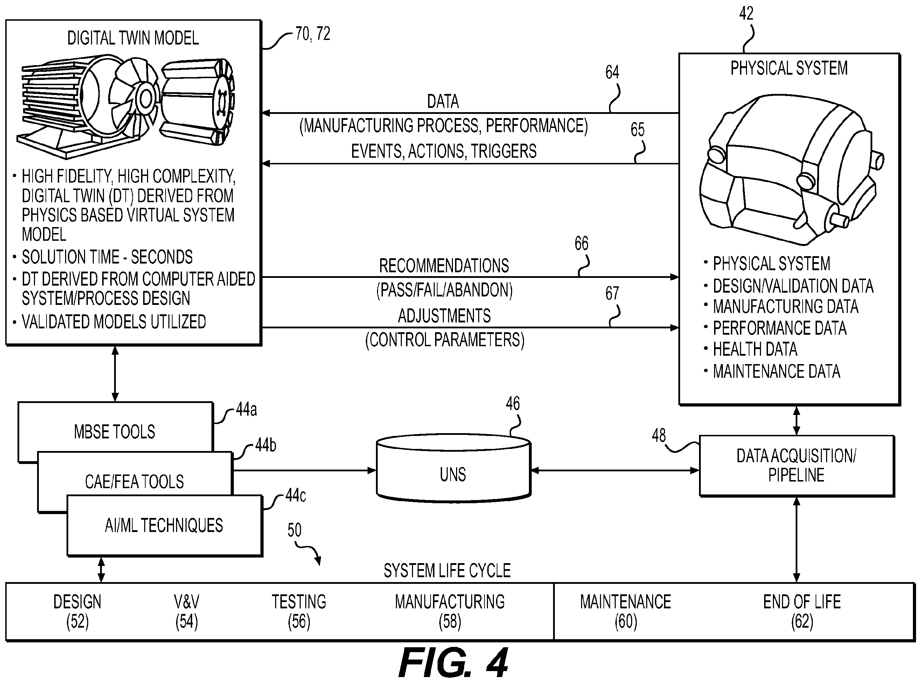

FIG. 4 shows a block diagram of a digital twin system for an EDU, in accordance with the present disclosure. The digital twin system of FIG. 4 includes a digital twin model 70,72, of the EDU in combination with a physical system 42 of an EDU. The digital twin model 70,72 may include a high-fidelity, high-complexity, physics-based virtual system model, such as the system model 40. The digital twin model 70,72 may also include computer-aided system/ process design. The digital twin model 70,72 may provide model validation and/or analysis results within a few seconds. Data is transferred bi-directionally between the digital twin model 70,72 and the physical system 42. Operating data 64, such as manufacturing process information and/or performance data, is transmitted from the physical system 42 to the digital twin model 70,72. Instance data 65, such as data regarding events, actions, and triggers, may also be transmitted from the physical system 42 to the digital twin model 70,72. Recommendation data 66, such as instructions to pass, fail, or abandon a given part, is transmitted from the digital twin model 70,72 to the physical system 42. Adjustment data 67, such as control parameters, is also transmitted from the digital twin model 70,72 to the physical system 42.

As shown in FIG. 4, the digital twin may include one or more MBSE tools 44a CAE/FEA tools 44b, and/or artificial intelligence (AI) / machine learning (ML) (AI/ML) techniques 44c to analyze and validate the digital twin model 70,72. Those MBSE tools 44a CAE/FEA tools 44b and/or AI/ML techniques 44c may be in functional communication with a UNS storage memory 46, which may include non-transient storage memory. The UNS storage memory 46 may include one or more databases, which may be distributed across one or more physical storage memory devices. A data acquisition pipeline 48 is arranged to measure the physical system 42 and to communicate data regarding the physical system 42 to the UNS storage memory 46.

FIG. 4 also shows a system lifecycle 50 in functional communication with the one or more MBSE tools 44a, CAE/FEA tools 44b, and/or Artificial Intelligence (AI) / Machine Learning (ML) techniques 44c, and with the data acquisition pipeline 48. The system lifecycle 50 includes design at step 52, verification and validation (V&V) at step 54, testing at step 56, manufacturing at step 58, maintenance at step 60, and end-of-life at step 62. Each of the steps 52,54,56,58,60, 62 may represent a phase in a lifecycle of a EDU. Step 52 may include setting and/or adjusting any number of design parameters related to aspects of the design of any one of numerous components in the EDU. Step 54 may include verification and validation of a given design for the EDU from step 52. Step 56 may include testing of the given design for the EDU from step 52. In some embodiments, step 56 may only take place once the given design passes V&V at step 54. Step 58 may include manufacturing the EDU based on the given design. In some embodiments, step 58 may only take place once the given design passes testing at step 56. Step 60 includes maintenance of the EDU, including regular maintenance, preventative maintenance, and/or repair of the EDU or related equipment. Step 62 includes end-of-life (EOL) of the EDU based on the given design. Step 62 may include information regarding various failure modes for the EDU, which may include statistical likelihoods for various EOL-related events. Step 62 may also include other information, such as potential risks and/or other factors related to EOL. Such other information may include, for example, recyclability of parts, environmental impact of various parts and/or processing likely to be required after EOL.

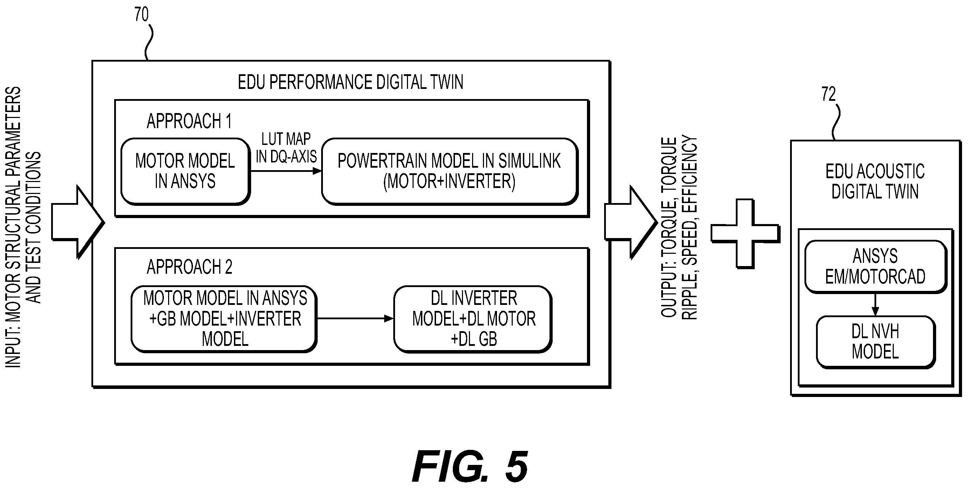

FIG. 5 shows a block diagram combining two different digital twin models 70,72, for the EDU. As shown, the digital twin models 70,72 include an EDU performance digital twin 70 that outputs performance data regarding the given design for the EDU, such as Torque, Torque Ripple, Speed, and efficiency. The EDU performance digital twin 70 may also be called an EDU physical digital twin 70 and it may include description of one or more physical characteristics of the EDU. The EDU performance digital twin 70 may take, as inputs, motor structural parameters regarding the given design for the EDU, and test conditions. The digital twin models 70,72 also include an EDU acoustic digital twin 72 that is configured to provide data regarding NVH characteristics of operating the EDU. The digital twin models 70,72 may each model electromagnetic torque and loss. Additionally or alternatively, transient response of the inverter switching may be considered for EM loss calculations.

In some embodiments, deep learning may be used to generate each of the digital twin models 70,72, with very high fidelity. For example, the deep learning may include an artificial neural network (ANN) with multiple layers of processing may be used to extract progressively higher level features of data to develop the digital twin models 70,72. The ANN may include, for example, a convolutional neural network (CNN), although other types of ANN may be used. These models 70,72 will fit mesh level outputs of the CAE/FEA models, thus producing a high accuracy digital twin (DT). These models can then be integrated with Simulink. Finally, a digital twin of the integrated Simulink model can be generated using Deep Learning as well. Alternatively or additionally, a machine learning (ML) technique and/or an artificial intelligence (AI) model may be used.

In some embodiments, one or more of the the digital twin models 70,72, may use a blockchain for recording data. Blockchain technology can be used within the digital twin framework to bolster data integrity, enhance auditability, and enable secure sharing of sensitive information. Blockchain's decentralized and immutable ledger may ensure that each piece of data is transparently recorded and cannot be changed retrospectively. This use of blockchain technology may foster trust and collaboration among stakeholders by providing a secure and transparent mechanism for data handling and sharing, crucial in environments requiring stringent data security measures.

In some embodiments, either or both of the digital twin models 70,72 may include a numeric model of individual components of a manufacturing process or a manufactured article. The numeric model may include, for example, one or more of: a black-box model, a grey-box model, and/or a white-box model. The digital twin models 70,72 may be configured using the numeric model of the individual components.

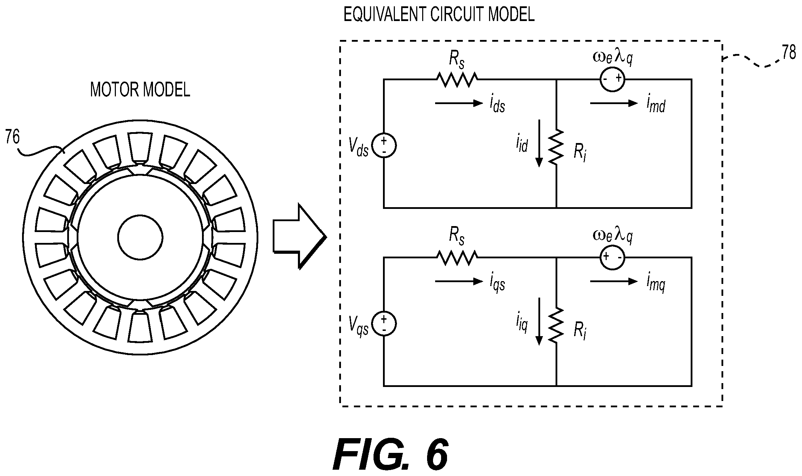

FIG. 6 shows a schematic diagram illustrating Input & Output Parameters for the digital twin models 70,72 of the EDU. A motor model 76 models the electric machine of the EDU and may include equivalent circuit models 78. The equivalent circuit model may include a d-axis circuit and a q-axis circuit representing electrical characteristics of the electric machine of the EDU.

Table 1, below, shows a table of input parameters for the digital twin models of the EDU. The listed parameters may include d-axis inductance, q-axis inductance, and permanent magnet (PM) flux linkage. Each of those motor parameters may have several different corresponding geometric influence factors that impact them. For example, the data may describe d-axis Inductance influences due to each of: Skewing, Airgap, Max. Saturation Bar, Magnet Height, Max and Min Pocket Heigh, and Radius. The data may describe q-axis Inductance influences due to each of: Airgap, Skewing Deviation, Pocket Radius, Br. The data may also describe PM Flux linkage influences due to each of: Max. Br, Max. Magnet Layer, Min. Magnet Pocket Height, Min. Outside Saturation Bars.

**Table 1**

| **Motor Parameters** | **Geometric Influence** |
|---|---|
| *d*-axis Inductance | Skewing, Airgap, Max. Saturation Bar, Magnet Height, Max and Min Pocket Heigh, and Radius |
| *q*-axis Inductance | Airgap, Skewing Deviation, Pocket Radius, Br |
| PM Flux Linkage | Max. Br, Max. Magnet Layer, Min. Magnet Pocket Height, Min. Outside Saturation Bars |

In some embodiments, the high-fidelity models 70,72 may employ deep learning to characterize the parameters for the digital twin models 70,72 of the EDU, instead of a lookup table (LUT) of conventional techniques.

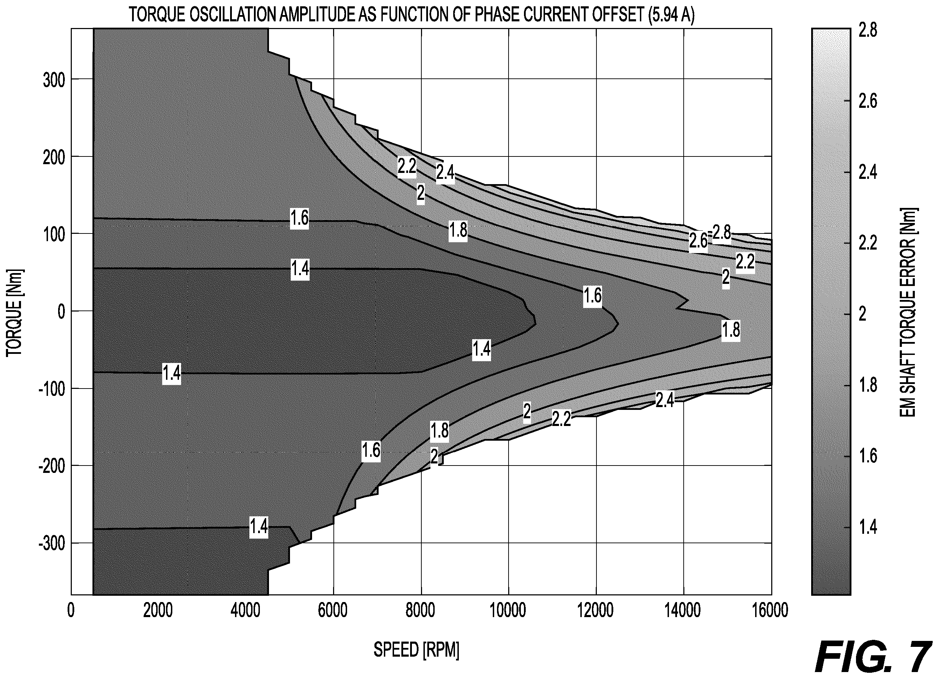

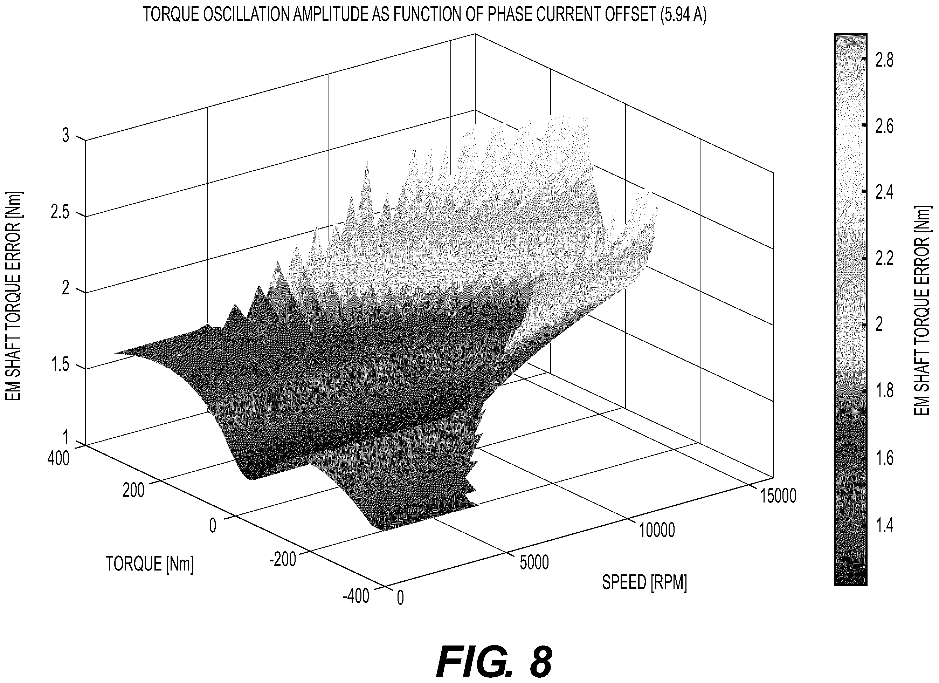

FIG. 7 shows a graph of torque vs. speed for the EDU. FIG. 8 shows a graph illustrating torque oscillation amplitude as a function of phase current offset for the EDU. The graphs of FIGs. 7 - 8 may represent parameters for the digital twin models 70,72 of the EDU.

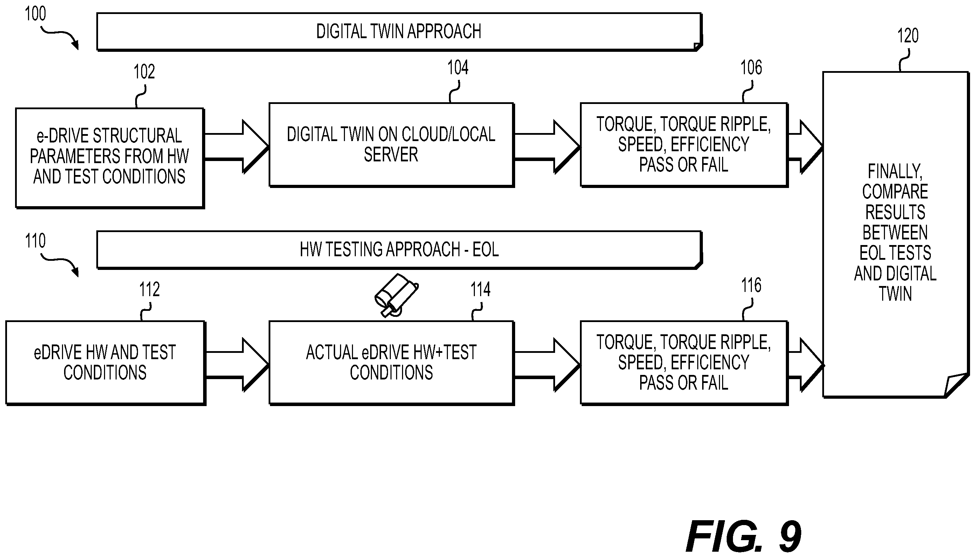

FIG. 9 shows a schematic diagram for a validation strategy comparing a digital twin testing method 100 with a conventional end-of-line (EoL) hardware testing method 110. The digital twin testing method 100 includes providing first parameter data 102, including E-drive Structural Parameters from hardware (HW) and Test Conditions, to a validation digital twin 104, which may be located on a distributed network (i.e. Cloud) and/or on a Local Server. The validation digital twin 104 generates first output data 106, such as Torque, Torque Ripple, Speed, Efficiency, and/or a PASS or FAIL signal.

The conventional EoL hardware testing method 110 includes providing second setting data 112, such as E-Drive HW and Test Conditions for configuring and operating a hardware test 114. The hardware test 114 may use actual eDrive HW + Test Conditions in accordance with the second setting data 112. The hardware test 114 generates second output data 116, such as Torque, Torque Ripple, Speed, Efficiency, and/or a PASS or FAIL signal.

A testing comparator 120 compares the first output data 106 from the digital twin testing method 100 with the second output data 116 from the conventional EoL hardware testing method 110. If any differences exist, the digital twin model can be revised to account for the differences.

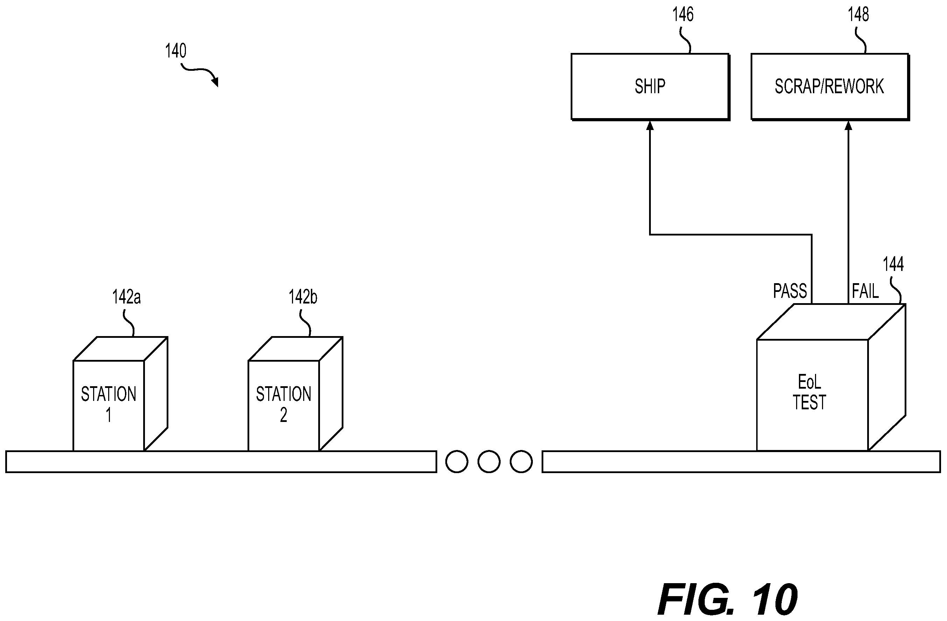

FIG. 10 shows a schematic diagram of a manufacturing line 140 using a conventional full EoL test for all assemblies. The manufacturing line 140 includes a plurality of manufacturing stations 142a, 142b performing various work tasks. The manufacturing line 140 also includes a testing apparatus 144 configured to test a manufactured assembly, such as an EDU assembly. The testing apparatus 144 may test each manufactured assembly to generate a pass/fail signal for each manufactured assembly that is produced. The manufacturing line 140 may be configured to ship passing manufactured assemblies at 146 based on the testing apparatus 144 indicating a pass signal. The manufacturing line 140 may be configured to direct non-conforming manufactured assemblies at 148 for scrap or rework based on the testing apparatus 144 indicating the fail signal.

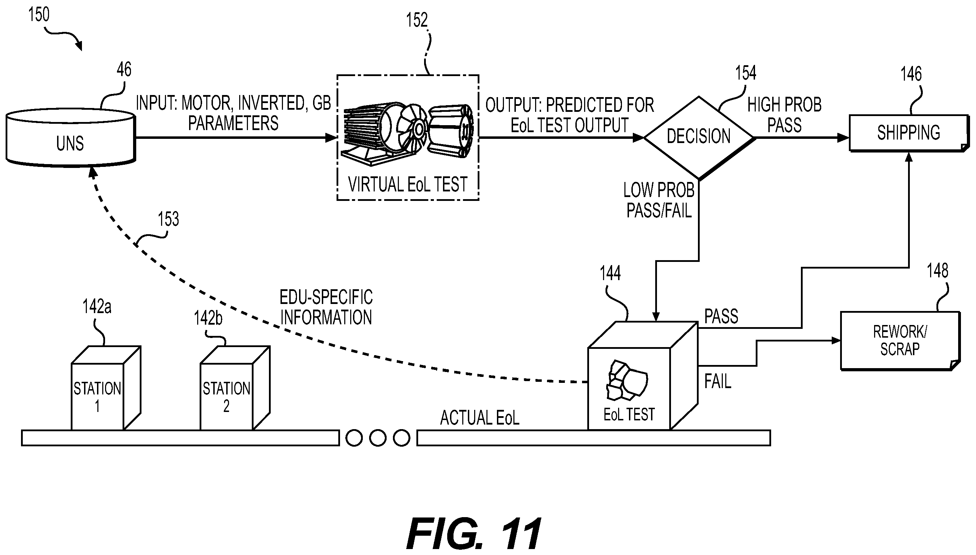

FIG. 11 shows a schematic diagram of manufacturing line 150 using a digital twin for reducing EoL testing for some assemblies. The manufacturing line 150 of FIG. 11 includes the testing apparatus 144 for physical testing of some of the EDU assemblies, but it also includes a virtual EOL test 152 using EDU-specific build information 153, such as d-axis inductance, q-axis inductance, and PM flux linkage, which may be measured for the electric motor in a given EDU assembly, and which may be transmitted and stored via the UNS storage memory 46. The virtual EOL test 152 provides a decision at 154 indicating that the given EDU assembly has either a high probability of passing inspection or a low probability of passing inspection. If the virtual EOL test 152 indicates that the given EDU has a high probability of passing inspection, the given EDU may be sent at 146 for shipment and/or further production. If the virtual EOL test 152 indicates that the given EDU has a low probability of passing inspection, the given EDU may subjected to physical testing at 144. If the given EDU passes the physical testing, the given EDU may be sent at 146 for shipment and/or further production. However, if the given EDU fails the physical testing, the given EDU may be sent at 148 for rework and/or to scrap.

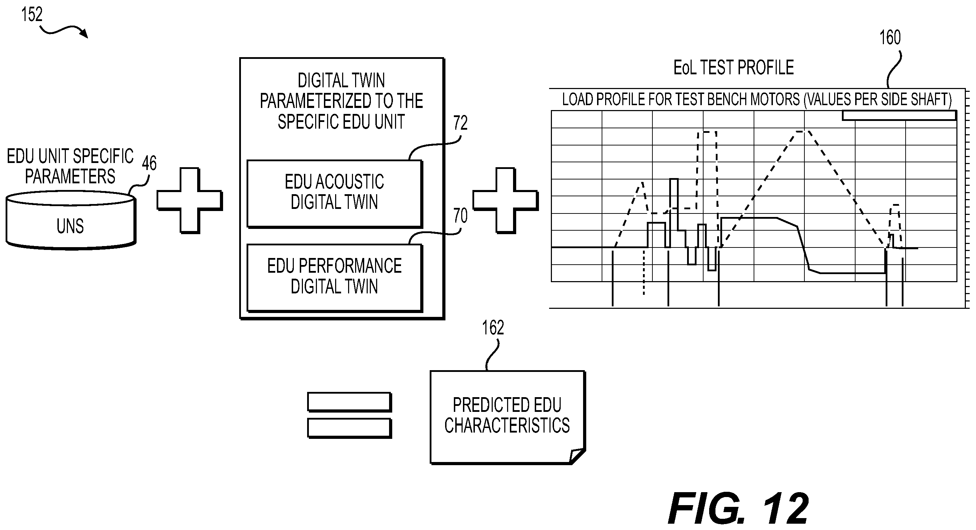

FIG. 12 shows a schematic block diagram of the virtual EOL test 152 for providing unit-specific EoL test result prediction using a digital twin. The virtual EOL test 152 uses EDU unit-specific parameters for each particular EDU, from the UNS storage memory 46. It provides those unit-specific parameters for each particular EDU to the Digital twin parameterized to the specific EDU unit to each of the EDU performance digital twin 70 and the EDU acoustic digital twin 72, together with an EoL test profile 160 in order to generate predicted EDU characteristics 162 describing expected behavior of each particular EDU.

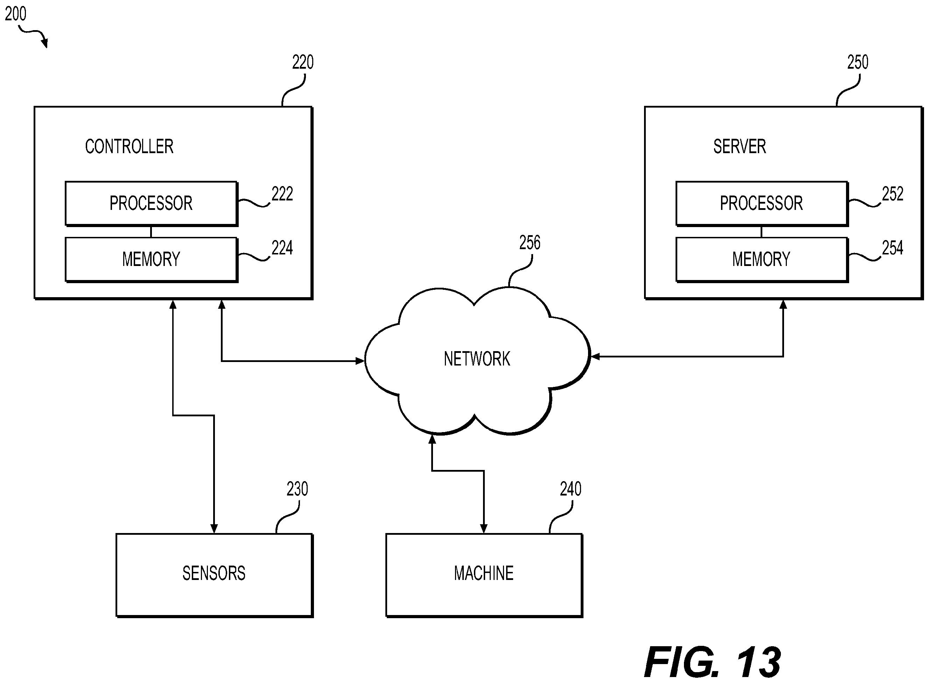

FIG. 13 shows a block diagram of a system 200 for a process digital twin operating in real-time to optimize performance of a manufacturing process. The system 200 includes a controller 220 having a first processor 222 operably connected to a first storage memory 224. The first storage memory 224 stores instructions, such as program code for execution by the first processor 222. The first storage memory 224 also holds data to be used by the first processor 222. One or more sensors 230 are functionally connected to the controller 230 and configured to provide data regarding the manufacturing process and/or a manufactured article. The sensors 230 may include one or more cameras, scanners, or other image capturing hardware. The system 200 also includes a server 250, which may include one or more computers, and which are located remotely from the controller 220. The server 250 includes a second processor 252 operably coupled to a second storage memory 254. The server 250 is configured to communicate with the controller 220 via one or more data networks 256.

The system 200 also includes a machine 240, such as an injection molding machine, that is configured to communicate bi-directionally with the controller 220 via the data networks 256. One or more of the controller 220 and/or the server 250 may implement a manufacturing digital twin 260 representing parts being manufactured or otherwise operated-upon by the machine 240.

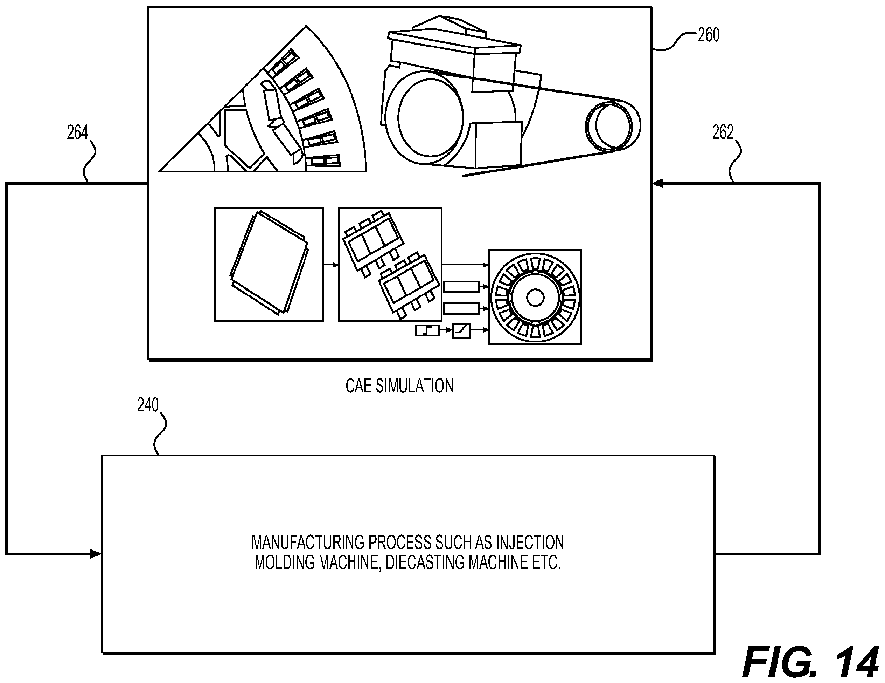

FIG. 14 shows a schematic flow diagram illustrating real-time deployment of a digital twin for operating a machine. As shown, a CAE simulation 260 simulates operation of a manufactured article or assembly. The CAE simulation 260 receives real-time data 262 from a manufacturing process, such as the machine 240. The CAE simulation 260 is continually updated by the real-time data 262, enabling the CAE simulation 260 to generate real-time insights 264 to the machine 240 for adjusting one or more operating parameters of the machine 240. The real-time insights 264 may include, for example, data regarding decreases in cycle time and/or improvements in quality.

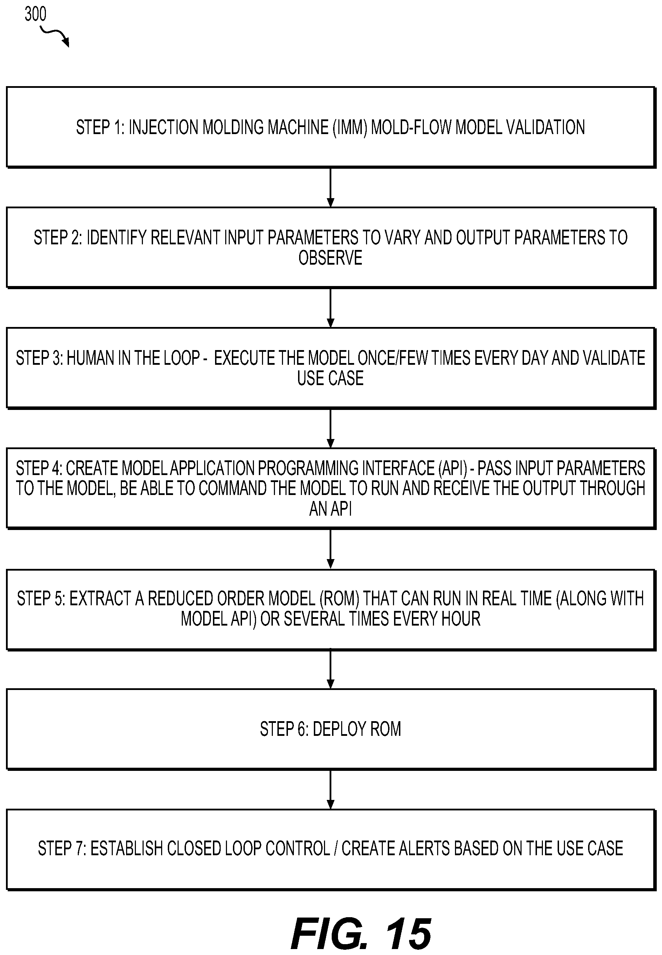

FIG. 15 shows a listing of steps in a first method 300 for implementing a digital twin for operating an injection molding machine. The first method 300 includes: moldflow model validation at step 1, identifying relevant input parameters to vary and output parameters to observe at step 2, and human action at step 3. Step 3 may include a human action to execute the model once or a few times every day and validate use case.

The first method 300 proceeds with creating a model Application Programming Interface (API) at step 4. Step 4 may include passing input parameters to the model and commanding the model to run and receive the output through an API. The first method also includes extracting a reduced order model (ROM) at step 5. The ROM may run in real time (along with model API) or several times every hour. The first method 300 also includes deploying the ROM at step 6; and establishing closed-loop control and/or alerts based on the use case at step 7.

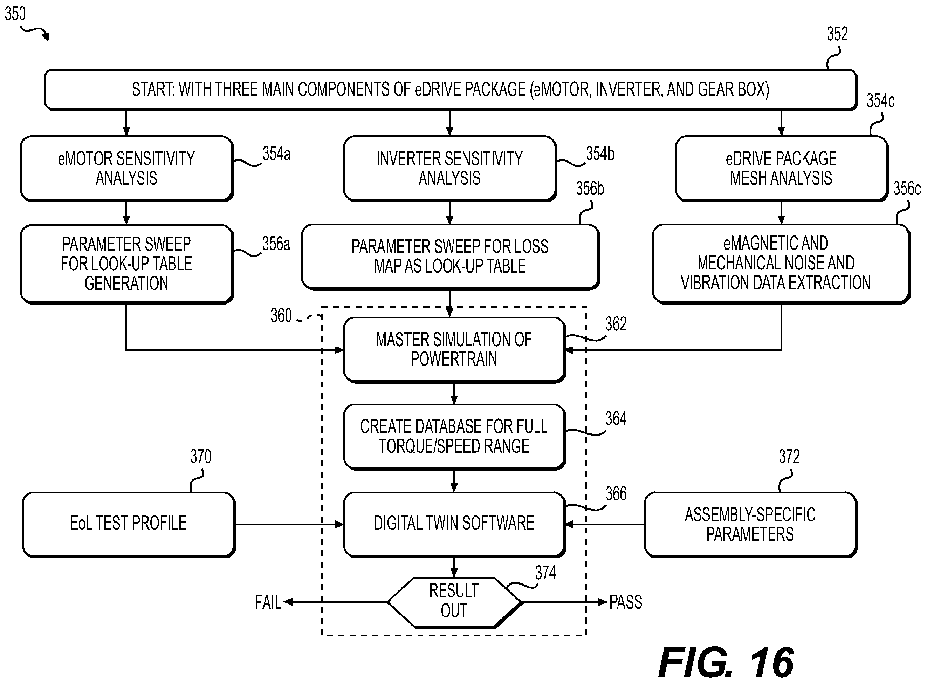

FIG. 16 shows a workflow diagram illustrating an EoL test 350 for an EDU using a digital twin. The EoL test 350 starts at 352 with a model of the EDU having three main components in an eDrive Package (eMotor, Inverter, and Gear box).

The EoL test 350 includes an eMotor Sensitivity Analysis at 354a to provide a Parameter Sweep for Look-up Table Generation at 356a. The EoL test 350 also includes an Inverter Sensitivity Analysis 354b to provide a Parameter Sweep for Loss Map as Look-up Table at 356b. The EoL test 350 also includes an eDrive Package Mesh Analysis at 354c to provide an eMagnetic and Mechanical Noise and Vibration Data Extraction at 356c. Each of the separate functions 354a/356a, 354b/356b, and 354c/356c may be performed in parallel and simultaneously.

The EoL test 350 also includes an eDrive digital twin model 360 that takes data generated at each of 356a, 356b, and 356c to describe features of a given eDrive package. The eDrive digital twin model 360 includes a master simulation of a powertrain 362 and creates a database at 364 based on the master simulation and for a full range of torque/speed combinations. A digital twin software package 366 operates using the database data from 364 and using both an EoL test profile 370 and assembly-specific parameters 372. Results are output from the digital twin software 366 at 374 to indicate the given eDrive package either passing or failing the EoL test. The results output at 374 may indicate the given eDrive package having a probability of passing the EoL test that is either above or below a given probability threshold.

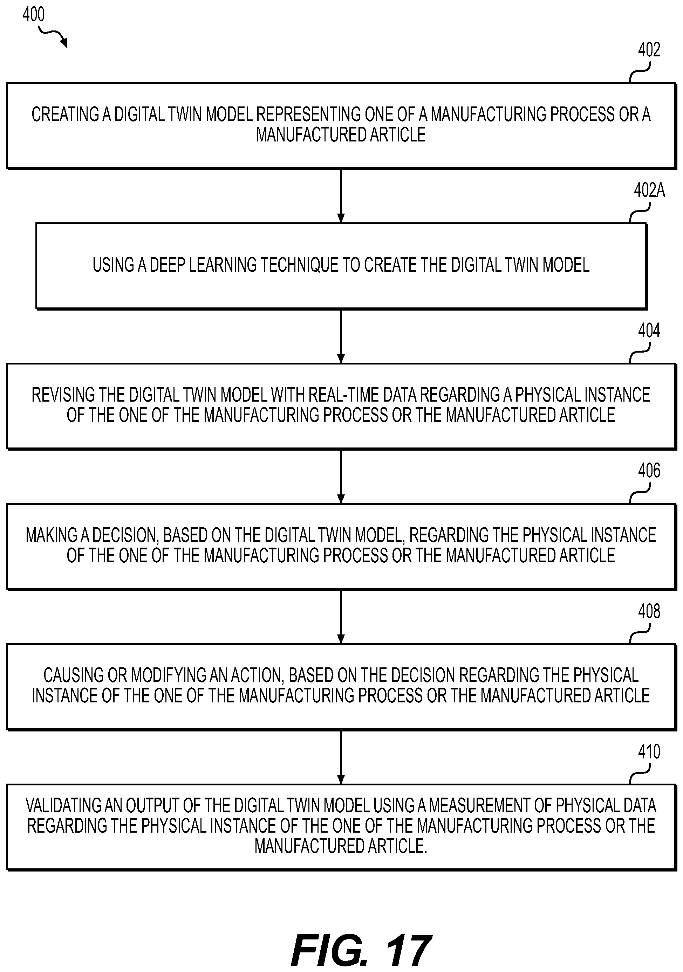

FIG. 17 shows a flow chart listing steps in a second method 400 of controlling a manufacturing process. As can be appreciated in light of the disclosure, the order of operation within the second method 400 is not limited to the sequential execution as illustrated in FIG. 17, but may be performed in one or more varying orders as applicable and in accordance with the present disclosure

The second method 400 includes creating, at 402, a digital twin model representing one of a manufacturing process or a manufactured article. For example, the digital twin model may be directed to a manufacturing process, such as operating an injection molding machine. Alternatively or additionally, the digital twin model may be directed to a manufactured article, such as an electric drive unit (EDU), which is formed or modified by the manufacturing process. In various embodiments, the manufactured article may include on or more components, such as injection molded pieces, that are formed by the manufacturing process. The manufacturing process may form the manufactured article by assembling one or more components, which may include welding or other fastening operations. Alternatively or additionally, the manufactured article may be modified by the manufacturing process, such as by machining or by performing one or more treatments, such as cleaning, polishing, or painting.

In some embodiments, step 402 includes using, at 402A, a deep learning technique to create the digital twin model. For example, step 402 may include using an artificial neural network (ANN) with multiple layers of processing to extract features of data to develop, program, and/or adjust one or more tuning parameters of the digital twin model.

The second method 400 also includes revising, at 404, the digital twin model with real-time data regarding a physical instance of the one of the manufacturing process or the manufactured article.

The second method 400 also includes making, at 406, a decision, based on the digital twin model, regarding the physical instance of the one of the manufacturing process or the manufactured article. For example, the decision may include determining whether an EoL test of a given article or assembly would have a likelihood of passing that exceeds a threshold value. Alternatively or additionally, the decision may include determining whether a different parameter value for a manufacturing process would decrease cycle time and/or improve quality.

The second method 400 also includes causing or modifying, at 408, an action, based on the decision regarding the physical instance of the one of the manufacturing process or the manufactured article. For example, step 408 may include directing a given part to a physical EoL testing or directly to shipment. Alternatively or additionally, step 408 may adjusting one or more parameters, such as temperature or cycle time in a manufacturing process, in order to decrease cycle time and/or improve quality.

In some embodiments, the second method may further include validating, at 410, an output of the digital twin model using a measurement of physical data regarding the physical instance of the one of the manufacturing process or the manufactured article. Step 410 may include rigorously testing the predictions and outputs of the digital twin against actual physical data obtained from testing the real-world counterpart. By correlating the virtual outcomes with empirical results, this approach verifies the precision and reliability of the digital twin. Such validation may be critical to trust-building and credibility, demonstrating that the twin accurately mimics and predicts the behavior of the physical system under various conditions.

In some embodiments, the digital twin model includes two or more digital twin sub-models directed to different aspects of the one of the manufacturing process or the manufactured article. For example, the two or more digital twin sub-models include a performance digital twin configured to provide performance data regarding the one of the manufacturing process or the manufactured article, and an acoustic digital twin configured to provide data regarding NVH characteristics of operating the one of the manufacturing process or the manufactured article.

In some embodiments, the two or more digital twin sub-models are each dynamically adjustable in response to real-time changes in at least one of: manufacturing parameters and/or external factors, such as market demand or supply chain disruptions. This adaptive capability may ensure that the digital twin remains relevant and accurate as conditions change, facilitating immediate and appropriate responses to optimize production and maintain efficiency.

In some embodiments, the performance digital twin is configured to apply a predictive maintenance algorithm configured to predict potential failures and suggest maintenance activities. By analyzing data related to machine operation and historical performance, a predictive maintenance algorithm may predict potential failures and suggest maintenance activities before breakdowns occur. This proactive maintenance approach can advantageously minimize downtime, enhance machinery lifespan, and ensure consistent production quality, thereby optimizing operational efficiency and cost-effectiveness.

In some embodiments, the digital twin model may have extended functionality by establishing a feedback loop, which may provide a dynamic and continuous flow of data from the physical system to its virtual counterpart. This feedback may allow for real-time updates and perpetual improvements in the model's accuracy and predictive capabilities. As operational conditions change or as new data becomes available, the digital twin iteratively receives updates, enhancing its relevance and functionality. This perpetuating refinement may help in maintaining high levels of efficiency, optimizing the manufacturing process, reducing waste, and improving product quality by adjusting the simulation to better reflect real-world conditions.

In some embodiments, extended data sources may be utilized for the digital twin model to include not only current operational data but also environmental conditions and historical performance data from similar systems or models deployed elsewhere (physically or temporally). By integrating a broader dataset, the digital twin can provide more comprehensive simulations and predictive analyses. This enables better anticipation of potential issues and optimization of processes based on past outcomes and similar environmental conditions. Such enriched data integration may aid in enhancing process performance, extending product lifecycles, and enabling more robust scenario planning and risk management.

In some embodiments, the systems and methods of the present disclosure may incorporate augmented reality (AR) technology to enhance the interaction with the digital twin's data. Utilizing AR for visualization may allow users to see the digital twin overlaid on the real manufacturing environment, facilitating more intuitive understanding and interaction. This may be particularly useful for complex decision-making and operational training, as stakeholders can visualize outcomes and scenarios directly. AR can thus be an invaluable tool in bridging the gap between digital simulations and physical operations, enhancing the usability and accessibility of digital twin technology in real-time applications.

In some embodiments, the digital twin may be utilized to simulate potential emergency situations or deviations from expected specifications before they occur in the real world. By predicting how the system would behave under various stress conditions or failure modes, the digital twin may allow for proactive management and planning. It helps in identifying vulnerabilities, planning corrective actions in advance, and training staff on handling potential crises, thus directly contributing to enhanced safety, reliability, and quality control within manufacturing processes.

In some embodiments, the systems and methods of the present disclosure may provide remote management and tracking of the digital twin. For example, the digital twin may be integrated with a cloud-based platform, thereby enhancing its accessibility, scalability, and the ability to manage and synchronize data across different geographic locations and facilities. This cloud integration may enable centralized control, facilitates updates and upgrades to the twin models, and allows for seamless collaboration among different teams or units, leading to more coordinated and efficient operations and innovation.

In some embodiments, wherein the digital twin model includes regulatory compliance requirements. The regulatory compliance requirements may be specific to a given industry and/or application. By integrating compliance data into the digital twin, manufacturers can simulate and verify that processes and products meet all legal and quality standards. This integration may help to preempt compliance issues, reduce the risk of penalties, and maintain product integrity, fostering consumer trust and legal security.

The system, methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors, processor architectures, combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method of controlling a manufacturing process, the method comprising:
creating a digital twin model representing one of the manufacturing process or a manufactured article formed or modified by the manufacturing process;
revising the digital twin model with real-time data regarding a physical instance of the one of the manufacturing process or the manufactured article;
making a decision, based on the digital twin model, regarding the physical instance of the one of the manufacturing process or the manufactured article; and
causing or modifying an action, based on the decision regarding the physical instance of the one of the manufacturing process or the manufactured article.

2. The method of Claim 1, further including validating an output of the digital twin model using a measurement of physical data regarding the physical instance of the one of the manufacturing process or the manufactured article.

3. The method of Claim 1, wherein the one of the manufacturing process or the manufactured article includes a manufacturing process.

4. The method of Claim 3, wherein the manufacturing process includes operating an injection molding machine.

5. The method of Claim 1, wherein the one of the manufacturing process or the manufactured article includes a manufactured article.

6. The method of Claim 5, wherein the manufactured article includes an electric drive unit (EDU) including an electric motor and at least one of an inverter, a gearbox, and a housing.

7. The method of Claim 6, further including developing a numeric model of individual components of the electric drive unit, wherein the numeric model includes non-linear and transient cross-coupling effects of operating the individual components of the electric drive unit.

8. The method of Claim 1, further including:
developing a numeric model of individual components of the one of the manufacturing process or the manufactured article, wherein the numeric model includes at least one of a black-box model, a grey-box model, and a white-box model; and
configuring the digital twin model using the numeric model of the individual components.

9. The method of Claim 1, wherein creating the digital twin model includes using at least one of: a deep learning technique, a machine learning (ML) technique, and an artificial intelligence (AI) model.

10. The method of Claim 9, wherein the digital twin model is created using the deep learning technique, and
wherein using the deep learning technique includes using an artificial neural network (ANN) with multiple layers of processing to extract features of data to configure the digital twin model.

11. The method of Claim 1, wherein the digital twin model includes two or more digital twin sub-models directed to different aspects of the one of the manufacturing process and the manufactured article, and
wherein the two or more digital twin sub-models are each dynamically adjustable in response to real-time changes in at least one of: manufacturing parameters or external factors.

12. The method of Claim 11, wherein the two or more digital twin sub-models include a performance digital twin configured to provide performance data regarding the one of the manufacturing process or the manufactured article, and an acoustic digital twin configured to provide data regarding NVH characteristics of operating the one of the manufacturing process or the manufactured article, and
wherein the performance digital twin is configured to apply a
predictive maintenance algorithm configured to predict potential failures and suggest maintenance activities.

13. The method of Claim 1, wherein digital twin model is configured to use an extended data source providing information regarding at least one of: environmental conditions and historical performance data from another manufacturing process.

14. The method of Claim 1, further comprising generating an augmented reality (AR) display presenting model data from the digital twin model overlaid on a live image of the physical instance of the one of the manufacturing process or the manufactured article.

15. The method of Claim 1, further comprising simulating, using the digital twin model, at least one of: an emergency situation or a deviation from an expected specification representing a failure mode.
